**Europäisches Patentamt**

**European Patent Office**

**Office européen des brevets**

(19)

(11) **EP 1 160 650 A2**

(12) **EUROPÄISCHE PATENTANMELDUNG**

(43) Veröffentlichungstag:
   **05.12.2001 Patentblatt 2001/49**

(51) Int Cl.⁷: **G06F 1/26**, G06F 1/28, G06F 1/30

(21) Anmeldenummer: **01111513.6**

(22) Anmeldetag: **11.05.2001**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **02.06.2000 DE 10027381**

(71) Anmelder: **ROBERT BOSCH GMBH**
   **70442 Stuttgart (DE)**

(72) Erfinder:
   • **Hog, Norbert**
     **77815 Buehl (DE)**
   • **Gille, Andreas**
     **77815 Buehl (DE)**

(54) **Vorrichtung und Verfahren zur Erkennung eines Warmstarts eines Controllers**

(57) Es wird eine Vorrichtung und ein Verfahren zur Erkennung eines Warmstarts eines Controllers beschrieben.

Die Vorrichtung weist einen Kondensator (C) und einen ersten Widerstand (R1), die zusammen ein RC-Glied bilden, auf. Weiterhin ist ein Komparator vorgesehen, welcher die am Kondensator (C) anliegende Spannung mit einer Referenzspannung ($U_{ref}$) vergleicht und als Ergebnis des Vergleichs ein binäres Signal ausgibt.

Bei dem erfindungsgemäßen Verfahren wird mit einem Komparator die über einen Kondensator (C) abfallende Spannung mit einer Referenzspannung ($U_{ref}$) verglichen. Als Ergebnis wird ein binäres Signal ausgegeben, welches von einem Port (E1) des Controllers eingelesen wird.

**FIG. 1**

EP 1 160 650 A2

**Beschreibung**

Stand der Technik

Die vorliegende Erfindung betrifft eine Vorrichtung und ein Verfahren zur Erkennung eines Warmstarts eines Controllers.

Bei der Spannungsversorgung elektronischer Steuergeräte bzw. Controller in Kraftfahrzeugen kommt es gelegentlich zu Unterbrechungen. Dies hat zur Folge, daß für kurze Zeit die Steuergeräte ohne Spannungsversorgung sind. Dies kann bei einem Mikrocontroller zu einem Reset führen. Nachdem die Spannungsversorgung wieder sichergestellt ist, verfügt der Controller über keine Informationen bezüglich der Dauer des Spannungsausfalls. Nach einem kurzen Ausfall der Spannungsversorgung ist ein Warmstart durchzuführen. Wird die Zündung nach einer längeren Standzeit eingeschaltet, ist ein Kaltstart notwendig. Bei einem Kaltstart werden Funktionen ausgeführt, deren Ausführung nach einem kurzen Spannungsausfall jedoch störend sind oder in Extremfällen gar die Fahrtsicherheit beeinflussen.

Es ist bekannt, die Dauer des Ausfalls der Versorgungsspannung mit Hilfe der Entladekurve eines Kondensators zu bestimmen. Um dem Controller eine Information zum Ladezustand des Kondensators zu geben, wird ein Analog/Digital-Wandler benötigt.

Aus der DE 32 36 934 C2 ist eine Vorrichtung zur Verbesserung des Kaltstartverhaltens von Brennkraftmaschinen beschrieben. Bei dieser Vorrichtung dient ein Kondensator als analoger Speicher, der eine der Dauer des jeweils vorhergehenden Startversuchs entsprechende Ladung aufweist, so daß die Ladung und damit die am Kondensator anliegende Spannung unmittelbar die zu speichernde und abzufragende Information bildet. Die Spannung am Kondensator wird bei einem Startversuch von einem Analog/Digital-Wandler abgefragt. Die Zahl von Analog/Digital-Wandlern in Microcontrollern ist jedoch meist begrenzt, so daß die zur Verfügung stehenden Wandler in der Regel schon belegt sind.

Aufgabe der vorliegenden Erfindung ist es daher, eine Vorrichtung und ein Verfahren zu entwickeln, die es ermöglichen, die Dauer des Ausfalls der Versorgungsspannung zu ermitteln und das Ergebnis an den Controller zu übertragen, ohne einen Analog/Digital-Wandler einzusetzen.

Die Aufgabe wird durch eine Vorrichtung und/oder ein Verfahren gemäß der unabhängigen Ansprüche gelöst.

Vorteilhafte Ausgestaltungen der Erfindung ergeben sich aus der Beschreibung sowie den weiteren Ansprüchen.

Vorteile der Erfindung

Die erfindungsgemäße Vorrichtung weist einen Kondensator und einen ersten Widerstand auf. Der Kondensator und der erste Widerstand bilden ein RC-Glied. Die erfindungsgemäße Vorrichtung zeichnet sich dadurch aus, daß weiterhin ein Komparator vorgesehen ist, der die am Kondensator abfallende Spannung mit einer Referenzspannung vergleicht und als Ergebnis ein binäres Signal ausgibt.

Nach Ausfall der Versorgungsspannung entlädt sich der Kondensator über den ersten Widerstand. Wenn wieder die Versorgungsspannung anliegt, vergleicht der Komparator die noch am Kondensator abfallende Spannung und vergleicht diese mit einer Referenzspannung. Als Ergebnis gibt der Komparator ein binäres (Ja/Nein) Signal aus, welches von einem Port des Controllers eingelesen wird. Je nach Dauer des Ausfalls erkennt der Controller anhand des binären Signals ob ein Warmstart vorliegt. Die erkennbare Ausfallzeit hängt von der Dimensionierung des RC-Gliedes ab. Die Zeitkonstante, welche den Verlauf der Entladung bestimmt, ergibt sich aus:

$$\tau = R * C.$$

Zur Erkennung eines Warmstarts wird somit lediglich ein Port, nämlich ein digitaler Ein-/Ausgang des Controllers, benötigt. Controller verfügen über ausreichend viele Ports. Analog/Digital-Wandler hingegen stehen meist nur sehr begrenzt zur Verfügung.

Eine erfindungsgemäße Komparatorschaltung läßt sich einfach mit einem Operationsverstärker, einem Transistor, einem zweiten Widerstand und einem dritten Widerstand realisieren.

Als Referenzspannung dient bevorzugt das Ausgangssignal eines Spannungsreglers. Auf diese Weise kann die Vorrichtung leicht geänderten Anforderungen angepaßt werden.

Bevorzugt sind der Operationsverstärker und der Transistor im Spannungsregler integriert. Nutzt man im Spannungsregler enthaltene Bauelemente, sind zur Realisierung der Vorrichtung im Vergleich zum Stand der Technik nur noch zwei Widerstände notwendig.

Das erfindungsgemäße Verfahren zur Erkennung eines Warmstarts eines Controllers sieht vor, daß ein Komparator eine Spannung, die über einen Kondensator abfällt, mit einer Referenzspannung vergleicht und als Ergebnis ein binäres Signal ausgibt.

Nach Ausfall der Versorgungsspannung eines Controllers entlädt sich der Kondensator. Nachdem die Versorgungsspannung wieder anliegt, vergleicht der Komparator die über den Kondensator abfallende Spannung - diese ist abhängig von der Ladung des Kondensators - und gibt als Ergebnis ein binäres Signal aus. Dieses wird von einem Port des Controllers eingelesen.

Die Erfindung wird anhand der beigefügten Zeichnung näher erläutert. In dieser zeigt

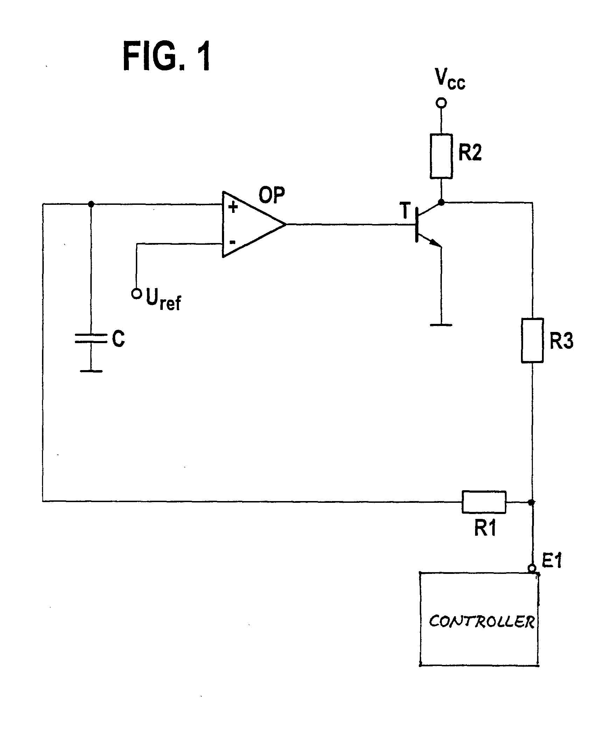

    Figur 1 eine Ausführungsform der erfindungsgemäßen Vorrichtung im Schaltbild,

Figur 2 Kennlinien, welche bei Auftreten eines Kaltstarts vorliegen,

Figur 3 der Figur 2 entsprechende Kennlinien, welche im Falle einer langen Unterbrechung der Batteriespannung $U_{bat}$ auftreten, und

Figur 4 den Figuren 2 und 3 entsprechende Kennlinien, welche im Falle einer kurzen Unterbrechung der Batteriespannung $U_{bat}$ auftreten.

Eine erfindungsgemäße Vorrichtung weist einen Kondensator C, einen ersten Widerstand R1, einen Operationsverstärker OP, einen Transistor T, einen zweiten Widerstand R2 und einen dritten Widerstand R3 auf.

Der Kondensator entlädt sich während eines Spannungsausfalls über den ersten Widerstand R1. Wenn wieder eine Versorgungsspannung $V_{cc}$ anliegt, wird die am Kondensator C abfallende Spannung mit einer Referenzspannung $U_{ref}$ verglichen. Dazu dient der Komparator. Dieser ist bei der dargestellten Ausführungsform mit dem Operationsverstärker OP, dem Transistor T, dem zweiten Widerstand R2 und dem dritten Widerstand R3 realisiert. Das binäre Ausgangssignal des Komparators wird von einem Port E1 des Controllers eingelesen.

Je nach Funktionsumfang sind statt des Begriffes Controller ebenso weitere Bezeichnungen, wie Prozessor, Mikrocomputer, Steuereinheit, Rechner etc. geläufig und werden hierbei nicht unterschieden. Im weiteren wird vornehmlich die Bezeichnung Controller verwendet.

Der Operationsverstärker OP verstärkt die Differenz zwischen der Spannung über dem Kondensator C und der Referenzspannung $U_{ref}$.

Liegt die Spannung über dem Kondensator C noch über der Referenzspannung $U_{ref}$ (Fall 1), wird der Transistor T gesperrt. In diesem Fall dominiert $V_{cc}$ über R2 + R3. Damit liegt an E1 ein HIGH-Pegel entsprechend der Versorgungsspannung $V_{cc}$ über R2 und R3 an.

Liegt die Spannung über den Kondensator C unter der Referenzspannung $U_{ref}$ (Fall 2), wird der Transistor T durchgeschaltet. Damit dominiert am Port E1 Masse über R3. Es liegt also in diesem zweiten Fall ein LOW-Pegel entsprechend des Spannungsabfalls über R3 gegen Masse an E1 an.

Das Ausgangssignal kann somit nur zwei Werte (HIGH und LOW) annehmen und ist somit binär. Die Werte bzw. Pegel selbst hängen von der Auslegung der Widerstände R2 und R3 ebenso wie von der Versorgungsspannung $V_{cc}$ ab.

Das Ergebnis, also der jeweilige Wert ist selbsthaltend, da der Kondensator C im Fall 1 wieder aufgeladen und in Fall 2 weiter entladen wird.

Entscheidend für die Warmstarterkennung bezüglich des Controllers ist der Ladungszustand des Kondensators C zum Zeitpunkt des Wiederanliegens der Versorgungsspannung $V_{cc}$, während der Controller theoretisch den Port E1 zu einem beliebigen späteren Zeitpunkt bedienen kann.

Nachdem der Controller wieder anläuft dient der Port E1, an dem die Vorrichtung angeschlossen ist, zunächst als Eingang. Das heißt er ist nach außen hochohmig, damit er die Spannung über den Kondensator C nicht beeinflußt. Während der Initialisierungsphase wird der Controller in der Regel das Signal am Port E1 einlesen. Anschließend muß der Controller den Port E1 auf Ausgang umschalten und einen nach außen niederohmigen Zustand einstellen, um den Kondensator C über den ersten Widerstand R1 wieder aufzuladen. In diesem Zustand verbleibt der Port E1 bis zum Ausfall oder Abschalten der Versorgungsspannung $V_{cc}$ oder bis zum Auftreten eines Resets. Die Versorgungsspannung $V_{cc}$ wird dabei im Allgemeinen durch einen Spannungsstabilisator aus der Versorgungsspannung bzw. Batteriespannung $U_{bat}$ bereitgestellt, woraus auch der Controller selbst bzw. in Abhängigkeit davon gespeist wird.

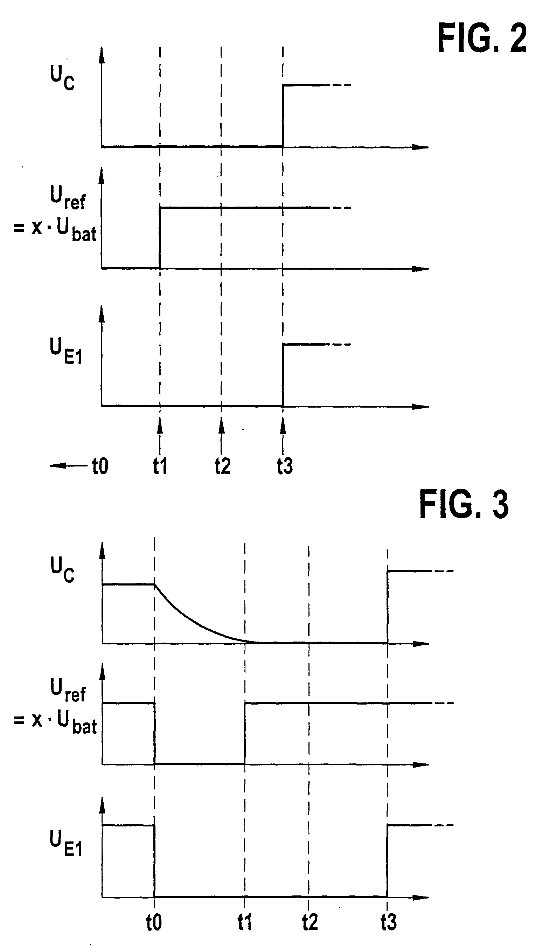

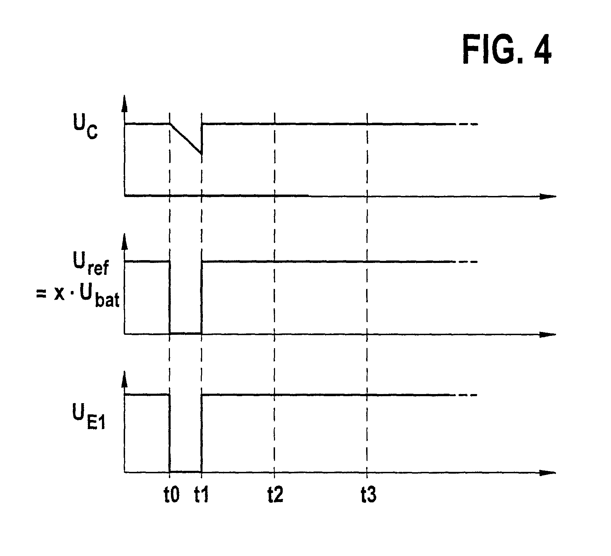

Die Erfindung wird nun weiter unter Bezugnahme auf die Figuren 2 bis 4 anhand von Fallbeispielen weiter diskutiert. Hierbei wird die Schaltung an drei charakteristischen Punkten betrachtet, nämlich bezüglich der Versorgungsspannung $U_{bat}$, der Spannung $U_c$ am Kondensator C und der Spannung $U_{E1}$ am Controller- bzw. Rechnerport, welche ein hochohmiger Eingang oder Ausgang sein kann.

Die Referenzspannung $U_{ref}$ ist dabei vorteilhafterweise abhängig von der Batteriespannung $U_{bat}$ und stammt beispielsweise aus einem Spannungsregler, mit z.B.

$$U_{ref} = x*U_{bat} \text{ und } 0 < x < 1.$$

Ferner wird die Schaltung zu vier charakteristischen Zeiten betrachtet, nämlich zu einem Zeitpunkt $t_0$, in dem die Batteriespannung $U_{bat}$ abfällt (beispielsweise von 12 Volt auf 0 Volt bzw. entsprechend bei einem anderen z.B. 42 Volt Bordnetz), bzw. die Versorgung durch $U_{bat}$ abgeschaltet wird oder ausfällt, zum Zeitpunkt $t_1$, in dem die Batteriespannung $U_{bat}$ bzw. die Versorgung durch die Batteriespannung $U_{bat}$ zu ihrem Ausgangswert zurückkehrt (beispielsweise von 0 Volt auf 12 Volt bzw. entsprechend bei einem anderen z.B. 42 Volt Bordnetz) oder wieder ausreichend ist, einem Zeitpunkt $t_2$, an dem der Rechner das Signal an Port E1 einliest und einen Zeitpunkt $t_3$, an dem der Rechner den Port E1 auf Ausgang schaltet, um den Kondensator C zu laden.

Zunächst wird anhand der Figur 2 das Verhalten bei einem Kaltstart erläutert, also ein Neustart nach längerem Stillstand des Systems d.h. daß die Versorgung des Controllers durch die Batterie längere Zeit ausgeschaltet bzw. ausgefallen war.

Wenn die Versorgungsspannung eingeschaltet wird (Zeitpunkt $t_1$), ist der Kondensator C vollständig entladen. Der Komparator zeigt an, daß die Kondensatorspannung $U_c$ niedriger als die Referenzspannung $U_{ref}$ ist, in dem er ein entsprechendes Signal (LOW-Pegel) an den Controller bzw. Rechner (Port E1) gibt.

Dieser LOW-Pegel bewirkt gleichzeitig, daß der Kondensator C nicht geladen wird (Selbsthaltung des Signals). Dies, also das Laden des Kondensators C, kann durch den Rechner bzw. Controller bewirkt werden, in dem er den Port E1 auf Ausgang umschaltet und ein HIGH-Signal ausgibt. Da der Rechnerport nach dem Reset in der Regel zunächst als hochohmiger Eingang konfiguriert ist, was im vorliegenden Fall eine wichtige Voraussetzung ist, hat der Rechner beliebig viel Zeit, das Signal zu lesen (beispielsweise zum Zeitpunkt $t_2$) und danach zum Zeitpunkt $t_3$ die Spannung am Rechner-Port E1 auf Ausgang umzuschalten, um den Kondensator C zu laden.

Damit wird gemäß Figur 2 ein Kaltstart erkannt und bei dem auftretenden Reset bzw. Startvorgang die vollständige Initialisierung bzw. die nötigen, entsprechenden Funktionen durchgeführt.

In Figur 3 ist das Verhalten der erfindungsgemäßen Vorrichtung im Falle eines erneuten Starts dargestellt, bei welchem die Versorgung durch die Batterie längere Zeit ausgeschaltet bzw. ausgefallen bzw. stark reduziert war.

Wenn die Versorgungsspannung zum Zeitpunkt $t_0$ ausfällt, beginnt sich die Kondensatorspannung $U_c$ über den ersten Widerstand zu entladen. Bei Wiederauftreten der Versorgungsspannung (Zeitpunkt $t_1$) ist $U_c$ bereits unter die Referenzspannung gesunken. Der weitere Verlauf gleicht im wesentlichen der unter Bezugnahme auf Figur 2 dargestellten Phase, d. h. vom Rechner wird ein Kaltstart-Signal erkannt. Auch hier wird das LOW-Signal auf dem Port E1 so lange gehalten, bis der Rechner zum Zeitpunkt $t_3$ auf Ausgang umschaltet, um den Kondensator C zu laden.

Damit wird bei dem auftretenden Reset auch hier eine vollständige Initialisierung entsprechend der Beschreibung zu Figur 2 durchgeführt.

In Figur 3 ist der Fall eines Warmstarts dargestellt, wobei die Versorgung durch die Batteriespannung $U_{bat}$ nur relativ kurze Zeit ausgefallen ist bzw. abgeschaltet war.

Bei Ausfall der Versorgungsspannung bzw. Batteriespannung zum Zeitpunkt $t_0$ beginnt sich der Kondensator über den ersten Widerstand R1 zu entladen, d. h. $U_c$ nimmt - wie dargestellt - ab. Bei Wiederauftreten der Versorgungsspannung zum Zeitpunkt $t_1$ ist die Kondensatorspannung $U_c$ noch größer als die Referenzspannung $U_{ref}$. Der Komparator gibt also jetzt einen HIGH-Pegel an den Rechner. Der HIGH-Pegel bewirkt gleichzeitig, daß der Kondensator C wieder aufgeladen wird (Selbsthaltung). Hierdurch kann vermieden werden, daß $U_c$ weiter sinkt und bereits unter der Referenzspannung liegt, wenn der Rechner das Signal zum Zeitpunkt $t_2$ einliest. Wenn der Rechner auf Ausgang umschaltet (Zeitpunkg $t_3$), ändert sich an der Spannung $U_{E1}$ am Rechner-Port nichts mehr, da der Komparator-Ausgang bereits den HIGH-Pegel ausgibt.

Damit kann bei einem Warmstart dieser erkannt werden und eine unnötige bzw. risikobehaftete vollständige Initialisierung nach einem Reset vermieden werden. Es werden vielmehr nur in diesem Fall notwendige Funktionen durch- oder weitergeführt, wodurch eine Sicherheitsbeeinträchtigung ausgeschlossen werden kann.

**Patentansprüche**

1. Vorrichtung zur Erkennung eines Warmstarts eines Controllers, welche einen Kondensator und einen ersten Widerstand, die ein RC-Glied bilden, aufweist, **dadurch gekennzeichnet, daß** ein Komparator vorgesehen ist, welcher die am Kondensator (C) anliegende Spannung mit einer Referenzspannung ($U_{ref}$) vergleicht und als Ergebnis des Vergleichs ein binäres Signal ausgibt, aus welchem der Warmstart erkannt werden kann.

2. Vorrichtung nach Anspruch 1, **dadurch gekennzeichnet, daß** der Komparator einen Operationsverstärker (OP), einen Transistor (T), einen zweiten Widerstand (R2) und einen dritten Widerstand (R3) aufweist.

3. Vorrichtung nach Anspruch 1 oder Anspruch 2, **dadurch gekennzeichnet, daß** als Referenzspannung ($U_{ref}$) ein Ausgangssignal eines Spannungsreglers dient.

4. Vorrichtung nach Anspruch 3, **dadurch gekennzeichnet, daß** der Operationsverstärker (OP) und der Transistor (T) im Spannungsregler integriert sind.

5. Verfahren zur Erkennung eines Warmstarts eines Controllers mit einer Vorrichtung gemäß einem der Ansprüche 1 bis 4, bei der ein Komparator die über einen Kondensator (C) abfallende Spannung mit einer Referenzspannung ($U_{ref}$) vergleicht und als Ergebnis ein binäres Signal ausgibt, welches von einem Port (E1) des Controllers eingelesen wird und aus welchem der Warmstart erkannt werden kann.

6. Verfahren nach Anspruch 5, **dadurch gekennzeichnet, daß** bei einem erkannten Warmstart bei einem Reset des Controllers vorgebbare Vorgänge zur Initialisierung des Controllers ausgelassen werden.

7. Verfahren nach Anspruch 5, **dadurch gekenn-**

**zeichnet, daß** die Referenzspannung abhängig von einer Versorgungsspannung des Controllers, insbesondere der Batteriespannung ($U_{bat}$), gebildet wird.

# FIG. 1

FIG. 2

FIG. 3

# FIG. 4